(19) Europäisches Patentamt / European Patent Office / Office européen des brevets

(11) **EP 2 122 951 B1**

(12) **EUROPEAN PATENT SPECIFICATION**

(45) Date of publication and mention
of the grant of the patent:
**29.06.2016 Bulletin 2016/26**

(21) Application number: **07848102.5**

(22) Date of filing: **14.12.2007**

(51) Int Cl.:
*H04L 25/03* $^{(2006.01)}$    *H04L 27/26* $^{(2006.01)}$

(86) International application number:
**PCT/EP2007/063947**

(87) International publication number:
**WO 2008/074734 (26.06.2008 Gazette 2008/26)**

(54) **INTER-CARRIER INTERFERENCE CANCELLATION FOR OFDMA SYSTEMS**

UNTERDRÜCKUNG VON ZWISCHENTRÄGER-INTERFERENZEN IN
OFDMA-KOMMUNIKATIONSSYSTEMEN

SUPPRESSION DES INTERFÉRENCES INTER-PORTEUSES DANS UN SYSTÈME DE
COMMUNICATION DE TYPE OFDMA

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.12.2006 US 870689 P
23.08.2007 US 844083**

(43) Date of publication of application:
**25.11.2009 Bulletin 2009/48**

(73) Proprietor: **Telefonaktiebolaget LM Ericsson
(publ)
164 83 Stockholm (SE)**

(72) Inventors:
• **WILHELMSSON, Leif
240 10 Dalby (SE)**
• **NEVALAINEN, Andreas
227 36 Lund (SE)**
• **SVENSSON, Jim
224 74 Lund (SE)**

(74) Representative: **Ericsson
Patent Development
Torshamnsgatan 21-23
164 80 Stockholm (SE)**

(56) References cited:
**WO-A-2006/111843     WO-A-2006/124810
US-A1- 2006 172 708**

**Description**

**FIELD OF THE INVENTION**

The present invention relates generally to wireless communications systems and in particular to a system and method for inter-carrier interference cancellation in an OFDMA downlink.

**BACKGROUND**

Orthogonal Frequency Division Multiplexing (OFDM) is a digital multi-carrier modulation scheme utilizing multiple closely-spaced, orthogonal sub-carriers. Each sub-carrier is modulated with a conventional modulation scheme (e.g., quadrature amplitude modulation, or QAM) at a low symbol rate, maintaining data rates similar to conventional single-carrier modulation schemes in the same bandwidth. OFDM modulation provides economical, robust communications during poor channel conditions, such as narrowband interference and frequency-selective fading due to multipath propagation. The low symbol rate allows for the use of a guard interval between symbols, reducing inter-symbol interference. OFDM is deployed or planned for a variety of wireless litigation systems, including IEEE 802.16 (WiMAX), some IEEE 802.11a/g wireless LANs (Wi-Fi), IEEE 802.20 Mobile Broadband Wireless Access (MBWA), and the like.

One proposal for a new flexible wireless cellular communication system, which can be seen as an evolution of the 3G WCDMA standard, is 3G Long Term Evolution (3G LTE). This system will use OFDM as multiple access technique (called OFDMA) in the downlink and will be able to operate on bandwidths ranging from 1.25 MHz to 20 MHz. Furthermore, data rates up to 100 Mb/s will be supported for the largest bandwidth. For the uplink, a kind of pre-coded OFDM is employed, where the primary purpose of the pre-coding is to reduce the large peak-to-average (PAR) ratio commonly known to be one of the drawbacks with OFDM.

OFDM is uniquely suited for LTE for a number of reasons. Relatively low-complexity receivers, as compared to other access techniques, can be used in case of highly time-dispersive channels. Additionally, at least in theory, OFDM allows for very efficient usage of the available bandwidth. For example, in the case of only one user transmitting, it is possible to exploit the fact that the channel quality typically is very different at different frequencies (that is, the channel is said to be frequency selective). Also, since the information in OFDM is transmitted on a large number of sub-carriers, different modulation and coding can be applied on different sub-carriers, rather than using the same modulation and coding on all sub-carriers.

One of the main challenges of OFDM is to ensure that the sub-carriers are orthogonal to one another. This implies that, for example, frequency offset and phase noise must be maintained at a sufficiently low level. If the orthogonality is lost, information on one sub-carrier is leaked to other sub-carriers, primarily to the closest ones. This leakage is referred to as inter-carrier interference (ICI).

OFDMA allows several users to share the available bandwidth by allocating different sub-carriers to the different users, making the users orthogonal to one another. The allocation of sub-carriers may be dynamic, such as allocating a larger number of sub-carriers to users that have a larger amount of data to transmit. Unlike to the situation with a single user in OFDM, loss of orthogonality of the sub-carriers may be significant if the different users' signals are transmitted with very different power, which may occur in the uplink or the downlink, due for example, to the differing proximity of users to a base station.

Two of the major factors giving rise to ICI are frequency error and Doppler spread. Frequency error is a large source of ICI in uplink transmissions, as each mobile transmitter may have a slightly different frequency offset from the base station. In the case of downlink transmissions, at any particular receiver the signals intended for different users will experience the same frequency error (although the frequency errors experienced by the different receivers in general are different). This frequency error can usually be estimated and compensated at a given receiver prior to the FFT, and thus does not give rise to a large ICI component. A Doppler spread will be manifest when one of the receiver or transmitter is moving relative to the other, and is thus an ICI source in both uplink and downlink transmissions (although it dominates over frequency error in the downlink case). For a multi-path channel, different paths will experience different Doppler frequency shifts, giving rise to a spread in the experienced Doppler frequency at the receiver side. This spread cannot be compensated for prior to the FFT, as is the case for a frequency error. Loss of orthogonality may arise from other factors, as discussed herein.

If the ICI is caused by Doppler spread, and if the paths are assumed to arrive from all directions with a uniform distribution (referred to as Jakes' model), the ICI can be accurately modeled as:

$$I(f_D) = \frac{\pi^2}{6}\left(\frac{f_D}{\Delta f}\right)^2,$$

where $f_D$ is the (one-sided) Doppler spread and Of is the carrier spacing between the sub-carriers.

If the ICI caused by Doppler spread is assumed to have the same effect as additive white Gaussian noise (AWGN), then the total noise experienced by a receiver is simply calculated as N + I, where N is power of the AWGN. Consequently, the *effective* signal-to-noise ratio (SNR) experienced by the system can be expressed as

$$SNR_{eff} = \frac{S}{N + I},$$

Using the effective SNR as defined above, it is easy to determine if ICI is an issue or not. It is also easily seen that the larger effective SNR that is required, the more stringent requirements there will be on keeping the ICI at a low level.

From these formulas, it is clear that a straightforward way to reduce the ICI is to increase the carrier spacing $\Delta f$. A known feature of OFDM is redundancy in the form of a cyclic prefix (CP) prepended to the useful part of each OFDM symbol, of duration $T_u$. The minimum duration of the CP should be at least as long as the (expected) maximum delay spread of the channel where the system is supposed to operate. Since the carrier spacing is the reciprocal of the duration of $T_u$, increasing $\Delta f$ means that $T_u$ will be decreased, but the CP duration must be maintained. Accordingly, increasing $\Delta f$ results in reduced spectrum efficiency.

Another strategy to reduce ICI is to estimate the ICI and then remove its impact on the received signal. In general, ICI cancellation is a complex operation that adds cost and increases power consumption in an OFDM receiver. There are two major reasons for the complexity of ICI cancellation. First, from a mathematical perspective, removing the impact of ICI involves computing the inverse to a very large matrix, which is a computationally intensive task. Second, to estimate the ICI, both the channel and the channel derivative must be estimated. Since ICI reduces the effective SNR, accurate channel estimation cannot be performed, resulting in poor estimates of the ICI. An iterative approach to ICI has been suggested in the art, beginning with initial channel estimation and ICI cancellation. Following the initial ICI cancellation, improved channel estimates are obtained from the signals from which the initial ICI estimate has been removed. An improved ICI estimate is then obtained using the improved channel estimates. This iterative procedure may be repeated to obtain the desired performance improvement. Such iterative ICI estimation is computationally complex, and introduces delay.

One known scheme for ICI cancellation relies on subtracting the ICI from different sub-carriers, rather than attempting to invert a matrix. While this approach yields a significant gain improvement, especially if used together with windowing, it has been shown that the gain remains far from that ideally possible if the ICI could be fully removed, primarily because the channel estimate, and in particular the channel change, are difficult to estimate with sufficient accurately. ICI cancellation schemes known in the art are complex, and although some yield considerable improvement, in general the improvement is far below what is theoretically possible.

Prior art downlink OFDM ICI cancellation has only been considered when information transmitted on all the sub-carriers are intended for the same user(s). That is, a signal is sent from one transmitter, over a plurality of sub-carriers, and is received by a single receiver.

An example of such an OFDM ICI cancellation is disclosed in WO 2006/111843 A.

## SUMMARY

According to one or more embodiments disclosed and claimed herein, a receiver and method is presented for ICI cancellation when a received signal comprises signals transmitted by a transmitter to a plurality of users. ICI cancellation is performed at a given user by identifying the signals intended to other users that cause the largest ICI to signals intended to the receiving user, and selectively removing the ICI contribution from these signals. This may be accomplished by calculating the ICI terms based on an estimate of the transmitted signal calculated as the received signal divided by an estimate of the channel. Alternatively, the transmissions causing the ICI may be selectively demodulated and decoded, and the improved estimates of the transmitted signal used for ICI estimation and cancellation. Which transmissions cause the largest ICI on others depends on the relative strength of the corresponding data and pilot symbols and how much orthogonality is lost.

One embodiment relates to a method of cancelling ICI in a target OFDMA wireless communication system receiver according to independent claim 1 and further detailed in dependent claims 2-8.

Another embodiment relates to a receiver in an OFDMA wireless communication system according to claim 9 and comprising the additional features provided in dependent claims 10-15.

## BRIEF DESCRIPTION OF THE DRAWINGS

Figure 1 is a functional block diagram of an OFDM receiver.

Figure 2 is a graph depicting the received signal power of OFDM sub-carriers transmitted to two users when power control is employed.

Figure 3 is a graph depicting the received signal power of OFDM sub-carriers transmitted to two users when power control is employed for data symbols and pilot symbols are transmitted at full power.

Figure 4 is a graph depicting the received signal power of OFDM sub-carriers transmitted to two users when power control is employed for data symbols and pilot symbols are transmitted at full power, and when pilot symbols are transmitted in the absence of data transmissions.

**DETAILED DESCRIPTION**

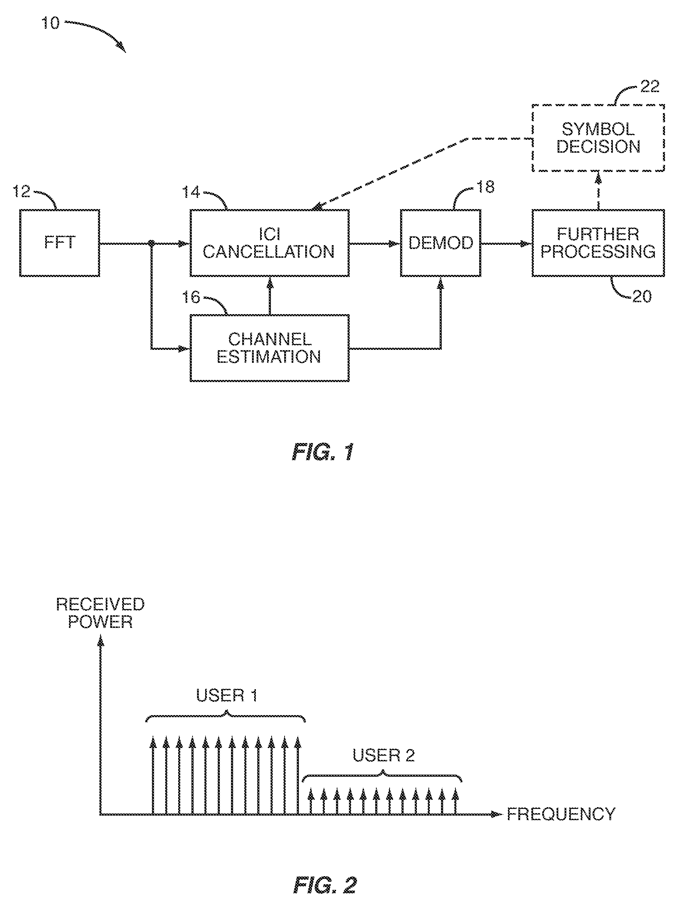

Figure 1 depicts a functional block diagram of the relevant portion of a mobile terminal OFDM receiver 10. The conventional elements of the receiver 10 - a Fast Fourier Transform (FFT) 12, some form of ICI Cancellation function 14, Channel Estimation function 16 providing channel estimates to the ICI Cancellation block 14, Demodulator function 18, and Further Processing 20 (such as soft value generation, FEC decoding, and the like) - are known in the art and are not further explicated herein. Inventive elements of the OFDM receiver 10 include the algorithms and processing steps performed by the ICI Cancellation function 14, and in some embodiments, a Symbol Decision function 22, which further aids ICI Cancellation 14 by providing decoded symbol information. The inventive ICI Cancellation techniques and Symbol Decision function 22 are explained in greater detail herein.

To simplify the description, the present invention is described for the down-link transmission in an OFDM system having 15 kHz sub-carrier spacing. Only two users receiving signals transmitted from the base station are considered, with each user's signal transmitted using a single resource block of 12 sub-carriers, corresponding to a bandwidth of 180 kHz. Those of skill in the art will readily recognize that the present invention is not limited to this specific configuration, but rather may be advantageously applied to ICI cancellation for any multi-user transmissions in an OFDM wireless communication system.

Figure 2 depicts OFDMA transmissions on sub-carriers to two users - user 1 and user 2. As depicted, the transmissions to user 1 are sent at a considerably higher power level than those to user 2. This reflects the power control scenario in which user 2 is located relatively close to the base station, with user 1 located at the edge of the cell or sector. The signals transmitted to user 1 cause inter-carrier interference in the signals sent to user 2, due to a loss of orthogonality between the sub-carriers.

To illustrate the magnitude of the ICI, consider the uplink case, in which the loss of orthogonality is due to a Doppler frequency shift imposing an effective frequency error on the received signals. Assuming user 1 is traveling toward the base station at 100 km/h and the carrier frequency is 2.6 GHz, a Doppler frequency shift of 240 Hz occurs in user 1's transmission. This frequency error might cause a significant leakage in the FFT, which will degrade the performance for user 1. In addition, it may completely ruin reception performance for user 2 due to the much higher power level, as depicted in Figure 2.

Suppose that user 1 is receiving symbol $S_{K+L}$ transmitted on sub-carrier $K+L$, and let $H_{K+L}$ and $H'_{K+L}$, denote the (average) channel transfer function for sub-carrier $K + L$, and the change of $H_{K+L}$ during the information-carrying part of the OFDM symbol, respectively.

The corresponding received signal on sub-carrier $K + L$ can be written $R_{K+L} = S_{K+L}H_{K+L}$, and the ICI that falls into sub-carrier $K$ is approximately given by

$$R_{K,K+L} = S_{K+L}H'_{K+L}\frac{1}{j2\pi L}$$

As discussed above, Figure 2 depicts a power control scenario in which pilot and data symbols to each user are transmitted at the same power level. If the signals to users 1 and 2 were transmitted at the same power level, the ICI level experienced by the closest (in frequency) sub-carrier of user 2 to user 1's signal can be shown to be approximately

$$I(f_D) = \frac{\pi^2}{6 \cdot 2}\left(\frac{f_D}{\Delta f}\right)^2 = \frac{\pi^2}{6 \cdot 2}\left(\frac{240}{15000}\right)^2 = -37dB$$

If user 1's signals are transmitted with 20 dB higher power, as depicted in Figure 2, the ICI level will be increased by 20 dB relative to the signal level of user 2, so that the effective SIR for the closest sub-carrier will only be about 17 dB, which may severely adversely impact receiver performance.

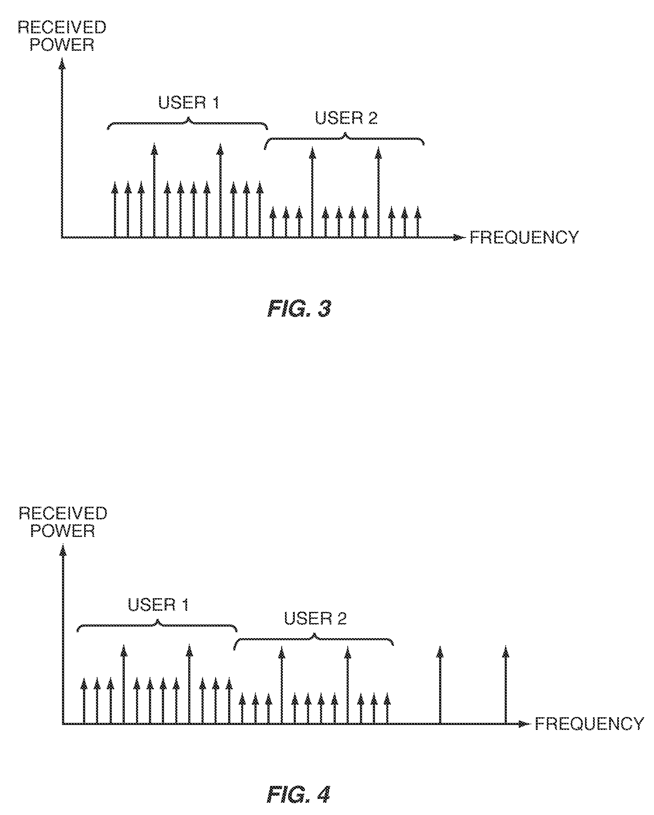

Figure 3 depicts a different scenario, wherein data is transmitted to different users utilizing power control, but the pilot symbols for all users are transferred at the same (maximum) power.

Here again, signals intended for user 1, and additionally the pilot symbols intended for user 2, may cause ICI for the user 2 data sub-carriers. Considering only the ICI caused by one pilot symbol, an estimate of the resulting ICI on a sub-carrier L sub-carriers away can be estimated as $R_{K,K+L} = S_{K+L} H'_{K+L} \dfrac{1}{j2\pi L}$ .

Figure 4 depicts a similar scenario, with the addition that pilot symbols are transmitted even when there is no data on the adjacent sub-carriers.

At any given time, the ICI illustrated in the situations depicted in Figures 2-4 may all be present, so that the resulting ICI level may be still further increased. Additionally, changes in several system parameters may also increase ICI in signals intended for other users. For example, the sub-carrier spacing may be reduced. This may occur because a longer cyclic prefix is needed, without increasing the overhead caused by the CP. If the sub-carrier spacing is reduced by a factor of two, the ICI level is increased 6 dB. As another example, the carrier frequency may be increased. Furthermore, although the numeric values depicted above are derived from a speed of 100 km/h, higher relative speeds may greatly increase ICI in other users' signals. For example, the ICI level is increased by 6 dB whenever the speed is increased by a factor of two.

According to one or more embodiments, the ICI Cancellation function 14 depicted in Figure 1 cancels ICI arising from sub-carriers carrying either data intended for other users, or pilot symbols. The ICI are first estimated according to

$$R_{K,K+L} = S_{K+L} \hat{H}'_{K+L} \frac{1}{j2\pi L} \approx \frac{R_{K+L}}{\hat{H}_{K+L}} \hat{H}'_{K+L} \frac{1}{j2\pi L}$$

where $S_{K+L}$ is the sent signal, which is estimated by taking the corresponding received signal and dividing by the channel estimate $\hat{H}_{K+L}$ provided by the Channel Estimation function 16. This estimated ICI is then subtracted from the sub-carriers carrying data prior to equalization. Not all ICI from all sub-carriers intended for a user needs to be estimated and cancelled; rather, only ICI from the closest (in frequency) sub-carriers may be selectively estimated cancelled, as signal quality needs and computational capacity dictate.

In one embodiment, which may of particular applicability in the case that data sub-carriers directed to other users are the primary contributors of ICI, the signals to users that are causing the most interference are demodulated and decoded, for example in the optional Symbol Decision function 22 of Figure 1. The more precise estimate of the sent signal, $\hat{S}_{K+L}$, is then used to estimate the ICI according to

$$R_{K,K+L} = S_{K+L} \hat{H}'_{K+L} \frac{1}{j2\pi L} \approx \hat{S}_{K+L} \hat{H}'_{K+L} \frac{1}{j2\pi L}$$

The demodulation and decoding of $\hat{S}_{K+L}$ *impose* additional delay; however, the ICI cancellation is generally more effective since $\hat{S}_{K+L}$ more accurately estimates the actual sent signal $S_{K+L}$ than does $\dfrac{R_{K+L}}{\hat{H}_{K+L}}$ .

As those of skill in the art will readily recognize, any or all of the functional blocks depicted in Figure 1 - including the FFT 12, ICI Cancellation 14, Channel Estimation 16, Demodulator 18, Further Processing 20, and Symbol Decision 22 - may, in any receiver 10, be implemented as hardware circuits, as programmable logic, as firmware or software executing on a microprocessor or Digital Signal Processor (DSP), or any combination thereof. Although the present invention has been explicated herein in terms of transmissions from a base station to two users' mobile terminals, the invention is not limited to this implementation, and may be advantageously applied to any OFDMA receiver that receives signals transmitted to two or more users on two or more sub-carriers.

The present invention is defined and limited only by the scope of appended claims 1-15.


**Claims**

1. A method of cancelling inter-carrier interference, ICI, in a target orthogonal frequency division multiple access, OFDMA, wireless communication system receiver receiving signals transmitted to it on a first set of sub-carriers and signals transmitted on a second set of sub-carriers to another receiver, the method comprising:

calculating the ICI in the received signals transmitted to the target receiver caused by the received signals transmitted to the other receiver; and

subtracting the calculated ICI from the received signals transmitted to the target receiver.

2. The method of claim 1 wherein the received signals transmitted to the target receiver and the received signals transmitted to the other receiver are transmitted from the same transmitter.

3. The method of claim 1 wherein calculating the ICI in the received signals transmitted to the target receiver caused by the received signals transmitted to the other receiver comprises using pilot symbols transmitted to the other receiver that are outside the bandwidth of the received signals transmitted to the target receiver for channel estimation, and calculating the ICI based on an estimate of the pilot symbols transmitted to the other receiver and the channel estimate.

4. The method of claim 3 wherein subtracting the calculated ICI from the received signals transmitted to the target receiver comprises subtracting the ICI from data symbols in the received signals transmitted to the target receiver.

5. The method of claim 3 wherein calculating the ICI comprises approximating the ICI as

$$R_{K,K+L} \approx \frac{R_{K+L}}{\hat{H}_{K+L}} \hat{H}'_{K+L} \frac{1}{j2\pi L}$$

where

$R_{K,K+L}$ is an estimate of ICI in sub-carrier K of the received signal transmitted to the receiver caused by sub-carrier $K+L$ of the received signal transmitted to the other receiver;

$\hat{H}_{K+L}$ is an estimate of the channel transfer function for sub-carrier $K + L$

$\hat{H}'_{K+L}$ is an estimate of the change of $\hat{H}_{K+L}$ during the information-carrying part of the OFDM symbol; and

$L$ is the distance in number of sub-carriers, i.e., L=+/-1 means adjacent sub-carriers.

6. The method of claim 1 further comprising receiving signals transmitted on a plurality of sets of sub-carriers to a plurality of other receivers, and wherein calculating the ICI in the received signals transmitted to the target receiver caused by the received signals transmitted to the other receiver comprises successively demodulating received signals transmitted to the other receivers to calculate the ICI from each received signal transmitted to another receiver.

7. The method of claim 6 wherein the order of successively demodulating received signals transmitted to the other receivers is determined by the amount of ICI each received signal transmitted to another receiver causes to the received signals transmitted to the target receiver.

8. The method of claim 7 wherein the order of successive demodulation is that the received signal transmitted to another receivers causing the most ICI in the received signals transmitted to the target receiver is demodulated first.

9. A receiver (10) in an orthogonal frequency division multiple access, OFDMA, wireless communication system, said receiver operative to receive signals transmitted to it on a first set of sub-carriers and additionally signals transmitted to at least one other receiver on a second set of sub-carriers, and to measure the received signal power levels;

an inter-carrier interference, ICI, cancellation unit (14) operative to calculate the ICI in the received signal transmitted to the receiver caused by a received signal transmitted to another receiver, and further operative to subtract the calculated ICI from the received signal transmitted to the receiver.

10. The receiver of claim 9 wherein the received signals transmitted to the receiver and the received signals transmitted to another receiver are transmitted from the same transmitter.

11. The receiver of claim 9 wherein the ICI in the received signals is calculated using pilot symbols transmitted to another receiver that are outside the bandwidth of the received signals transmitted to the receiver for channel estimation, and the ICI is calculated based on an estimate of the pilot symbols transmitted to another receiver and the channel estimate.

12. The receiver of claim 11 wherein subtracting the claculated ICI from the received signal comprises subtracting the calculated ICI from data symbols in the received signals transmitted to the receiver.

13. The receiver of claim 11 wherein the ICI is calculated by approximating the ICI as

$$R_{K,K+L} \approx \frac{R_{K+L}}{\hat{H}_{K+L}} \hat{H}'_{K+L} \frac{1}{j2\pi L}$$

where

$R_{K,K+L}$ is an estimate of ICI in sub-carrier K of the received signal transmitted to the receiver caused by sub-carrierK+L of the received signal transmitted to the other receiver;
$\hat{H}_{K+L}$ is an estimate of the channel transfer function for sub-carrier $K + L$
$\hat{H}'_{K+L}$ is an estimate of the change of $\hat{H}_{K+L}$ during the information-carrying part of the OFDM symbol; and
$L$ is the distance in number of sub-carriers, i.e., L=1 means adjacent sub-carriers.

14. The receiver of claim 9 wherein the receiver is further operative to receive signals transmitted on a plurality of sets of sub-carriers to a plurality of other receivers, and wherein calculating the ICI in the received signals transmitted to the receiver caused by the received signals transmitted to other receivers comprises successively demodulating received signals transmitted to the other receivers to calculate the ICI from each received signal transmitted to another receiver.

15. The receiver of claim 14 wherein the order of successively demodulating received signals transmitted to the other receivers is determined by the amount of ICI each received signal transmitted to another receiver causes to the received signals transmitted to the receiver.

**Patentansprüche**

1. Verfahren zur Unterdrückung von Störung zwischen Trägern, ICI, in einem Zielempfänger eines drahtlosen Kommunikationssystems mit Vielfachzugriff im orthogonalen Frequenzmultiplex, OFDMA, welcher Signale, die auf einem Satz von Unterträgern an ihn gesendet werden, und Signale empfängt, die auf einem zweiten Satz von Unterträgern an einen anderen Empfänger gesendet werden, wobei das Verfahren umfasst:

Berechnen der ICI in den an den Zielempfänger gesendeten Empfangssignalen, die durch die an den anderen Empfänger gesendeten Empfangssignale verursacht wird; und
Subtrahieren der berechneten ICI von den an den Zielempfänger gesendeten Empfangssignalen.

2. Verfahren nach Anspruch 1, wobei die an den Zielempfänger gesendeten Empfangssignale und die an den anderen Empfänger gesendeten Empfangssignale vom gleichen Sender gesendet werden.

3. Verfahren nach Anspruch 1, wobei das Berechnen der ICI in den an den Zielempfänger gesendeten Empfangssignalen, die durch die an den anderen Empfänger gesendeten Empfangssignale verursacht wird, ein Verwenden von Pilotsymbolen, die an den anderen Empfänger gesendet werden und die außerhalb der Bandbreite der an den Zielempfänger gesendeten Empfangssignale liegen, zur Kanalschätzung und Berechnen der ICI basierend auf einer Schätzung der an den anderen Empfänger gesendeten Pilotsymbole und der Kanalschätzung umfasst.

4. Verfahren nach Anspruch 3, wobei das Subtrahieren der berechneten ICI von den an den Zielempfänger gesendeten Empfangssignalen ein Subtrahieren der ICI von Datensymbolen in den an den Zielempfänger gesendeten Empfangssignalen umfasst.

5. Verfahren nach Anspruch 3, wobei das Berechnen der ICI ein Nähern der ICI umfasst als

$$R_{K,K+L} \approx \frac{R_{K+L}}{\hat{H}_{K+L}} \hat{H}'_{K+L} \frac{1}{j2\pi L},$$

wobei

$R_{K,K+L}$ eine Schätzung von ICI im Unterträger K des an den Empfänger gesendeten Empfangssignals ist, die durch den Unterträger K + L des an den anderen Empfänger gesendeten Empfangssignals verursacht wird;

$H_{K+L}$ eine Schätzung der Kanaltransferfunktion für den Unterträger $K + L$ ist;

$\hat{H}'_{K+L}$ eine Schätzung der Änderung von $\hat{H}_{x+1}$ während des Information befördernden Teils des OFDM-Symbols ist; und

L der Abstand der Anzahl von Unterträgern ist, d. h. L = +/-1 bedeutet benachbarte Unterträger.

**6.** Verfahren nach Anspruch 1, ferner umfassend ein Empfangen von Signalen, die auf einer Mehrzahl von Sätzen von Unterträgern an eine Mehrzahl von anderen Empfängern gesendet werden, und wobei das Berechnen der ICI in den an den Zielempfänger gesendeten Empfangssignalen, die durch die an den anderen Empfänger gesendeten Empfangssignal verursacht wird, ein sukzessives Demodulieren von an die anderen Empfänger gesendeten Empfangssignalen umfasst, um die ICI von jedem an einen anderen Empfänger gesendeten Empfangssignal zu berechnen.

**7.** Verfahren nach Anspruch 6, wobei die Reihenfolge des sukzessiven Demodulierens von an die anderen Empfänger gesendeten Empfangssignalen durch den Betrag von ICI bestimmt wird, den jedes an einen anderen Empfänger gesendete Empfangssignal an den an den Zielempfänger gesendeten Empfangssignalen verursacht.

**8.** Verfahren nach Anspruch 7, wobei die Reihenfolge der sukzessiven Demodulation derart ist, dass das an einen anderen Empfänger gesendete Empfangssignal, das die größte ICI in den an den Zielempfänger gesendeten Empfangssignalen verursacht, zuerst demoduliert wird.

**9.** Empfänger (10) in einem drahtlosen Kommunikationssystem mit Vielfachzugriff im orthogonalen Frequenzmultiplex, OFDMA, wobei

der Empfänger so ausgelegt ist, dass er Signale, die auf einem ersten Satz von Unterträgern an ihn gesendet werden, und außerdem Signale empfängt, die auf einem zweiten Satz von Unterträgern an mindestens einen anderen Empfänger gesendet werden, und die Empfangssignalleistungspegel misst;

eine Einheit (14) zum Unterdrücken von Störung zwischen Trägern, ICI, die so ausgelegt ist, dass sie die ICI in dem an den Empfänger gesendeten Empfangssignal berechnet, die durch ein an einen anderen Empfänger gesendetes Empfangssignal verursacht wird, und ferner so ausgelegt ist, dass sie die berechnete ICI von dem an den Empfänger gesendeten Empfangssignal subtrahiert.

**10.** Empfänger nach Anspruch 9, wobei die an den Empfänger gesendeten Empfangssignale und die an einen anderen Empfänger gesendeten Empfangssignale vom gleichen Sender gesendet werden.

**11.** Empfänger nach Anspruch 9, wobei die ICI in den Empfangssignalen unter Verwendung von Pilotsymbolen, die an einen anderen Empfänger gesendet werden und die außerhalb der Bandbreite der an den Empfänger gesendeten Empfangssignale liegen, zur Kanalschätzung berechnet wird, und die ICI basierend auf einer Schätzung der an einen anderen Empfänger gesendeten Pilotsymbole und der Kanalschätzung berechnet wird.

**12.** Empfänger nach Anspruch 11, wobei das Subtrahieren der berechneten ICI vom Empfangssignal ein Subtrahieren der berechneten ICI von Datensymbolen in den an den Empfänger gesendeten Empfangssignalen umfasst.

**13.** Empfänger nach Anspruch 11, wobei die ICI durch Nähern der ICI berechnet wird als

$$R_{K,K+L} \approx \frac{R_{K+L}}{\hat{H}_{K+L}} \hat{H}'_{K+L} \frac{1}{j2\pi L} \, ,$$

wobei

$R_{K,K+L}$ eine Schätzung von ICI im Unterträger K des an den Empfänger gesendeten Empfangssignals ist, das durch den Unterträger $K + L$ des an den anderen Empfänger gesendeten Empfangssignals verursacht wird;

$\hat{H}_{K+L}$ eine Schätzung der Kanaltransferfunktion für den Unterträger $K + L$ ist;

$\hat{H}'_{K+L}$ eine Schätzung der Änderung von $\hat{H}_{x+1}$ während des Information befördernden Teils des OFDM-Symbols ist; und

L der Abstand der Anzahl von Unterträgern ist, d. h. L = +/-1 bedeutet benachbarte Unterträger.

**14.** Empfänger nach Anspruch 9, wobei der Empfänger ferner so ausgelegt ist, dass er Signale empfängt, die auf einer Mehrzahl von Sätzen von Unterträgern an eine Mehrzahl von anderen Empfängern gesendet werden, und wobei das Berechnen der ICI in den an den Empfänger gesendeten Empfangssignalen, die durch die an andere Empfänger gesendeten Empfangssignale verursacht wird, ein sukzessives Demodulieren von an die anderen Empfänger gesendeten Empfangssignalen umfasst, um die ICI von jedem an einen anderen Empfänger gesendeten Empfangssignal zu berechnen.

**15.** Empfänger nach Anspruch 14, wobei die Reihenfolge des sukzessiven Demodulierens von an die anderen Empfänger gesendeten Empfangssignalen durch den Betrag von ICI bestimmt wird, den jedes an einen anderen Empfänger gesendete Empfangssignal an den an den Empfänger gesendeten Empfangssignalen verursacht.

**Revendications**

**1.** Procédé de suppression d'interférence inter-porteuse, ICI, dans un récepteur de système de communication sans fil à accès multiples par répartition de fréquence orthogonale, OFDMA, cible recevant des signaux qui lui sont émis sur un premier ensemble de sous-porteuses et des signaux émis sur un deuxième ensemble de sous-porteuses à un autre récepteur, le procédé comprenant :

le calcul de l'ICI dans les signaux reçus émis à destination du récepteur cible provoquée par les signaux reçus émis à destination de l'autre récepteur ; et
la soustraction de l'ICI calculée aux signaux reçus émis à destination du récepteur cible.

**2.** Procédé selon la revendication 1, dans lequel les signaux reçus émis à destination du récepteur cible et les signaux reçus émis à destination de l'autre récepteur sont émis en provenance du même émetteur.

**3.** Procédé selon la revendication 1, dans lequel le calcul de l'ICI dans les signaux reçus émis à destination du récepteur cible provoquée par les signaux reçus émis à destination de l'autre récepteur comprend l'utilisation de symboles pilotes émis à destination de l'autre récepteur qui sont à l'extérieur de la largeur de bande des signaux reçus émis à destination du récepteur cible pour une estimation de canal, et le calcul de l'ICI sur la base d'une estimation des symboles pilotes émis à destination de l'autre récepteur et de l'estimation de canal.

**4.** Procédé selon la revendication 3, dans lequel la soustraction de l'ICI calculée aux signaux reçus émis à destination du récepteur cible comprend la soustraction de l'ICI à des symboles de données dans les signaux reçus émis à destination du récepteur cible.

**5.** Procédé selon la revendication 3, dans lequel le calcul de l'ICI comprend l'approximation de l'ICI sous la forme de :

$$R_{K,K+L} \approx \frac{R_{K+L}}{\hat{H}_{K+L}} \, \hat{H}'_{K+L} \, \frac{1}{j2\pi L}$$

où

$R_{K,K+L}$ est une estimation de l'ICI dans la sous-porteuse K du signal reçu émis à destination du récepteur provoquée par la sous-porteuse K+L du signal reçu émis à destination de l'autre récepteur ;
$\hat{H}_{K+L}$ est une estimation de la fonction de transfert de canal pour la sous-porteuse K+L ;
$\hat{H}'_{K+L}$ est une estimation du changement de $\hat{H}'_{K+L}$ au cours de la partie de transport d'informations du symbole OFDM ; et
L est la distance en nombre de sous-porteuses, c'est-à-dire que L=+/-1 signifie des sous-porteuses adjacentes.

**6.** Procédé selon la revendication 1, comprenant en outre la réception de signaux émis sur une pluralité d'ensembles de sous-porteuses à destination d'une pluralité d'autres récepteurs, et dans lequel le calcul de l'ICI dans les signaux reçus émis à destination du récepteur cible provoquée par les signaux reçus émis à destination de l'autre récepteur comprend la démodulation successive des signaux reçus émis à destination des autres récepteurs pour calculer l'ICI à partir de chaque signal reçu émis à destination d'un autre récepteur.

**7.** Procédé selon la revendication 6, dans lequel l'ordre de démodulation successive des signaux reçus émis à destination des autres récepteurs est déterminé par la quantité d'ICI que chaque signal reçu émis à destination d'un autre récepteur provoque aux signaux reçus émis à destination du récepteur cible.

**8.** Procédé selon la revendication 7, dans lequel l'ordre de démodulation successive est que le signal reçu émis à destination d'autres récepteurs provoquant la plus grande ICI dans les signaux reçus émis à destination du récepteur cible est démodulé en premier.

**9.** Récepteur (10) dans un système de communication sans fil à accès multiples par répartition de fréquence orthogonale, OFDMA, ledit récepteur étant opérationnel pour recevoir des signaux qui lui sont émis sur un premier ensemble de sous-porteuses et en outre des signaux émis à au moins un autre récepteur sur un deuxième ensemble de sous-porteuses, et mesurer les niveaux de puissance de signaux reçus ;
comprenant en outre une unité de suppression d'interférence inter-porteuse, ICI, (14) opérationnelle pour effectuer le calcul de l'ICI dans le signal reçu émis à destination du récepteur provoquée par un signal reçus émis à destination d'un autre récepteur, et en outre opérationnelle pour effectuer la soustraction de l'ICI calculée au signal reçu émis à destination du récepteur.

**10.** Récepteur selon la revendication 9, dans lequel les signaux reçus émis à destination du récepteur et les signaux reçus émis à destination d'un autre récepteur sont émis en provenance du même émetteur.

**11.** Récepteur selon la revendication 9, dans lequel l'ICI dans les signaux reçus est calculée par l'utilisation de symboles pilotes émis à destination d'un autre récepteur qui sont à l'extérieur de la largeur de bande des signaux reçus émis à destination du récepteur pour une estimation de canal, et l'ICI est calculée sur la base d'une estimation des symboles pilotes émis à destination d'un autre récepteur et de l'estimation de canal.

**12.** Récepteur selon la revendication 11, dans lequel la soustraction de l'ICI calculée au signal reçu comprend la soustraction de l'ICI calculée à des symboles de données dans les signaux reçus émis à destination du récepteur.

**13.** Récepteur selon la revendication 11, dans lequel l'ICI est calculée par l'approximation de l'ICI sous la forme de :

$$R_{K,K+L} \approx \frac{R_{K+L}}{\hat{H}_{K+L}} \hat{H}'_{K+L} \frac{1}{j2\pi L}$$

où

$R_{K,K+L}$ est une estimation de l'ICI dans la sous-porteuse K du signal reçu émis à destination du récepteur provoquée par la sous-porteuse K+L du signal reçu émis à destination de l'autre récepteur ;
$H_{K+L}$ est une estimation de la fonction de transfert de canal pour la sous-porteuse K+L ; $\hat{H}'_{K+L}$ est une estimation du changement de $\hat{H}'_{K+L}$ au cours de la partie de transport d'informations du symbole OFDM ; et
L est la distance en nombre de sous-porteuses, c'est-à-dire que L=1 signifie des sous-porteuses adjacentes.

**14.** Récepteur selon la revendication 9, dans lequel le récepteur est en outre opérationnel pour recevoir des signaux émis sur une pluralité d'ensembles de sous-porteuses à destination d'une pluralité d'autres récepteurs, et dans lequel le calcul de l'ICI dans les signaux reçus émis à destination du récepteur provoquée par les signaux reçus émis à destination d'autres récepteurs comprend la démodulation successive des signaux reçus émis à destination des autres récepteurs pour calculer l'ICI à partir de chaque signal reçu émis à destination d'un autre récepteur.

**15.** Récepteur selon la revendication 14, dans lequel l'ordre de démodulation successive des signaux reçus émis à destination des autres récepteurs est déterminé par la quantité d'ICI que chaque signal reçu émis à destination d'un autre récepteur provoque aux signaux reçus émis à destination du récepteur.

**FIG. 1**

**FIG. 2**

*FIG. 3*

*FIG. 4*

**EP 2 122 951 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006111843 A